# EUROPÄISCHE PATENTANMELDUNG

(11) **EP 3 499 432 A1**
(43) Veröffentlichungstag der Anmeldung: **19.06.2019**
(21) Anmeldenummer: 17206615.1
(22) Anmeldetag: 12.12.2017
(51) Int. Cl.: G06Q 10/00

(54) **BOT FÜR EINE KOMMUNIKATIONSPLATTFORM**

(71) Anmelder: Siemens Aktiengesellschaft, 80333 München (DE)
(72) Erfinder: Hubauer, Thomas, 85748 Garching bei München (DE); Karlsson, Christer, 58229 Linköping (SE)

(57) **Zusammenfassung**

Die Erfindung betrifft einen Bot (10) für eine Kommunikationsplattform (1), wobei der Bot (10) zum Einlesen eines Eingangsdatensatzes (S1), wobei der Eingangsdatensatz eine Mehrzahl von Tickets oder einer Mehrzahl numerischer Darstellungen von Tickets umfasst, Abhören mindestens einer Kommunikation (22) zwischen mindestens zwei Personen (20) in der Kommunikationsplattform (1) (S2), wobei die mindestens eine Kommunikation (22) mindestens einen Servicefall oder mindestens eine numerische Darstellung eines Servicefalls aufweist, und Erzeugen eines Ausgangsdatensatzes (S3), wobei der Ausgangsdatensatz den Eingangsdatensatz und die mindestens eine Kommunikation (22) aufweist, eingerichtet ist. Ferner ist die Erfindung auf ein entsprechende Kommunikationsplattform, ein computer-implementiertes Verfahren und ein Computerprogrammprodukt gerichtet.

## Beschreibung

### 1. Technisches Gebiet

Die Erfindung betrifft einen Bot für eine Kommunikationsplattform. Ferner ist die Erfindung auf eine entsprechende Kommunikationsplattform, ein computer-implementiertes Verfahren und ein Computerprogrammprodukt gerichtet.

### 2. Stand der Technik

Aus dem Stand der Technik sind bereits diverse Kommunikationsplattformen bekannt. Die Kommunikationsplattformen gewährleisten einen Daten- oder Informationsaustausch zwischen Personen, insbesondere Experten. Die Kommunikationsplattformen können als Anwendungssoftware (auch Applikation genannt) auf Kommunikationsendgeräten, wie Notebook oder Smartphone eingerichtet werden. Beispielsweise ist "Circuit" als eine Kommunikationsplattform bekannt. Circuit ermöglicht eine effiziente Kommunikation via Sprache, Messaging, Video sowie Screen- und File-Sharing.

Die Nachteile der vorgenannten Kommunikationsplattformen liegen unter anderem darin begründet, dass die Daten meist zwischen Experten ausgetauscht werden. Insbesondere beobachten Experten ein bestimmtes Fehlverhalten einer Anlage oder einer Einheit der Anlage und tauschen über die Kommunikationsplattform hierzu Nachrichten aus.

Auf das obige Beispiel bezogen, sehen sich Experten für Turbinen auf dem technischen Gebiet der Gas- und Windkraft mit einem Ausfall einer Turbine konfrontiert. Sie suchen gemeinsam nach einer Lösung, wie einer bestimmten Maßnahme, um das Problem zu überwinden.

Falls die Experten jedoch nicht zu einem eindeutigen Diagnoseergebnis oder zu keinem Diagnoseergebnis, so ist die Diagnose gescheitert. Falls die Experten nicht verfügbar oder nicht mehr verfügbar sind, welche für das Diagnoseergebnis entscheidend sind, kann die Diagnose ebenfalls scheitern.

Die vorliegende Erfindung stellt sich daher die objektive technische Aufgabe eine Kommunikationsplattform bereitzustellen, welche eine effiziente und zuverlässige Kommunikation zwischen Personen gewährleistet und somit das Diagnoseergebnis verbessert.

### 3. Zusammenfassung der Erfindung

Die oben genannte Aufgabe wird erfindungsgemäß durch einen Bot für eine Kommunikationsplattform gelöst, wobei der Bot zum
a. Einlesen eines Eingangsdatensatzes, wobei
   der Eingangsdatensatz eine Mehrzahl von Tickets oder einer Mehrzahl numerischer Darstellungen von Tickets umfasst,
b. Abhören mindestens einer Kommunikation zwischen mindestens zwei Personen in der Kommunikationsplattform, wobei
   die mindestens eine Kommunikation mindestens einen Servicefall oder mindestens eine numerische Darstellung eines Servicefalls aufweist, und
c. Erzeugen eines Ausgangsdatensatzes, wobei
   der Ausgangsdatensatz den Eingangsdatensatz und die mindestens eine Kommunikation aufweist,
eingerichtet ist.

Dementsprechend ist die Erfindung auf einen Bot in einer Kommunikationsplattform gerichtet. Der Bot kann auch als "Chatbot" oder "virtueller Assistent" bezeichnet werden. Der Bot ist eine Robotereinheit, Software oder sonstiges Computerprogramm für Kommunikationsaufgaben.

Als beispielhafte Kommunikationsplattform ist u.a. Circuit zu nennen, wie weiter oben aufgeführt. Neben Circuit sind auch Live Meeting, Messenger, Salesforce, Slack, WhatsApp, Signal, und Telegram aufzuführen. Die Kommunikationsplattformen ermöglichen einen Datenaustausch zwischen Personen, insbesondere Experten, wie bereits weiter oben beschrieben. Der Datenaustausch kann beispielweise per Telefon, Email, Textnachrichten, oder Eintragungen in einem Dialogsystem etc. erfolgen.

Der Bot liest zunächst einen Eingangsdatensatz ein, beispielsweise über eine Eingabeschnittstelle. Der Eingangsdatensatz kann eine Mehrzahl von Tickets aufweisen. Die jeweiligen Tickets werden durch Menschen, insbesondere Personen, erzeugt. Sie können jeweils eine Problembeschreibung und eine Problemlösung aufweisen. Dementsprechend handelt es sich bei den Tickets um "human generated content".

In einem beispielhaften Fall ist eine Person ein Experte für ein bestimmtes Bauteil, nämlich einer Turbine, wie Gasturbine. Die Gasturbine kann mit einem Generator zur Erzeugung von elektrischem Strom gekoppelt sein. Der Experte erstellt für die Turbine ein Ticket. Die entsprechende Problembeschreibung des Tickets ist auf die Bauteile der Turbine und ihre Symptome als beobachtbares Verhalten gerichtet. Die entsprechende Problemlösung des Tickets ist auf eine Verdachtsdiagnose, wie Unwucht einer Achse der Turbine und/oder die Beseitigung der Unwucht gerichtet. Mit anderen Worten, werden die Problembeschreibung und deren Lösung durch den Experten in einem Ticket festgehalten. Dabei kann ein Experte ein oder mehrere Tickets erstellen.

Der Bot kann die Mehrzahl der Tickets in eine Mehrzahl numerischer Darstellungen der Tickets umwandeln. Die Umwandlung kann auch als Konvertierung bezeichnet werden. Der Text kann durch "Natural Language Processing (NLP)" und Machine Learning in Vektoren umgewandelt werden, insbesondere jeweils ein Ticket in einen Vektor. Unter NLP wird üblicherweise die maschinelle Verarbeitung einer natürlichen Sprache verstanden.

Alternativ kann der Bot auch eine Mehrzahl numerischer Darstellungen von Tickets einlesen. In diesem Fall entfällt die Umwandlung. Beispielsweise kann hierzu das Ticketsystem "Salesforce" für den Kundensupport die Mehrzahl numerischer Darstellungen von Tickets bereitstellen. Der Text wurde bereits durch Salesforce in Vektoren umgewandelt.

Der Bot hört daraufhin eine oder mehrere Kommunikationen zwischen zwei oder mehreren Personen in der Kommunikationsplattform ab. Das Abhören umfasst insbesondere das Erkennen einzelner Kommunikationsakte, insbesondere die Übersetzung von Sprache in Text, sowie die Interpretation der textuellen Kommunikationsinhalte. Der Bot hört ab, wenn die Kommunikation stattfindet. Mit anderen Worten, kann der Bot eine Kommunikation live ("LiveChat"), wie eine aktive Konferenz, verfolgen.

In einem beispielhaften Fall hört der Bot einen Dialog zwischen Personen einer Gruppe in einer bestimmten aktiven Konferenz in Circuit ab. Die Kommunikation ist mit einem Servicefall oder mehreren Servicefällen assoziiert. Beim Servicefall kann es sich um eine Diagnose, einen sonstigen Fall oder ein sonstiges Anliegen handeln. Beispielsweise kann ein Servicefall auf eine Achse oder andere Bauteile und Störfälle der Turbine gerichtet sein.

Der Bot kann wiederum den Servicefall einlesen und umwandeln oder direkt seine numerische Darstellung einlesen, vergleichbar mit den Tickets.

Der Bot erweitert daraufhin den Eingangsdatensatz um diese abgehörte Kommunikation. Mit anderen Worten, wird die Wissensbasis aus protokollierten in der Vergangenheit liegenden Tickets um den Inhalt der aktuell abgehörten Kommunikationen ergänzt.

Der Vorteil des erfindungsgemäßen Bots liegt in seiner Unterstützung der Personen in einer Kommunikationsplattform. Der Bot stellt in erster Linie in effizienter und benutzerfreundlicher Weise Lösungen zu vorliegenden Problemen einer Anlage oder eines Bauteils der Anlage bereit. Folglich können die Probleme im Vergleich zum Stand der Technik schneller gelöst werden und die Personen können anhand der Lösung deutlich schneller reagieren. Die Reaktionszeit wird dementsprechend wesentlich verkürzt. Dadurch können Ausfallzeiten durch fehlerhafte Anlagen oder Bauteile reduziert oder ganz vermieden werden. Die Anlagen oder Bauteile können beispielsweise dank des Bots im Störfall als eine Lösung bzw. Maßnahme notabgeschaltet oder bei geringer Last bis zur Wartung betrieben werden.

Ein weiterer Vorteil ist darin zu sehen, dass das Wissen der Experten in Form der Tickets zentral durch den Bot verwaltet werden können und dadurch nicht verloren geht.

In einer Ausgestaltung ist der Bot zum Umwandeln der Mehrzahl der Tickets durch einen linguistischen Algorithmus in eine Mehrzahl numerischer Darstellungen der Tickets eingerichtet.

In einer weiteren Ausgestaltung ist der Bot zum Umwandeln des mindestens einen Servicefalls durch einen linguistischen Algorithmus in mindestens eine numerische Darstellung des Servicefalls eingerichtet. Dementsprechend kann die Umwandlung eines Tickets oder eines Servicefalls in seine jeweilige numerische Darstellung mittels eines linguistischen Algorithmus erfolgen. Beispielsweise kann der Servicefall als Email oder sonstige Textnachricht vorliegen und durch NLP in seine numerische Darstellung, insbesondere einen numerischen Vektor mit einer bestimmten Dimension, umgewandelt werden. Dadurch kann die numerische Darstellung vorteilhaftweise durch den Bot automatisch in effizienter Weise weiterverarbeitet werden.

In einer weiteren Ausgestaltung ist der Bot weiterhin zum Speichern des Ausgangsdatensatzes in einer Speichereinheit, insbesondere Datenbank, eingerichtet. Dementsprechend kann der Ausgangsdatensatz in einer Speichereinheit abgelegt werden, auf welche in effizienter und zuverlässiger Weise zugegriffen werden kann. Die Datenbank als Speichereinheit hat sich hinsichtlich einer effizienten und einfachen Abfrage sowie Verwaltung des Ausgangsdatensatzes als besonders vorteilhaft erwiesen.

In einer weiteren Ausgestaltung ist der Bot weiterhin zum Abhören einer weiteren Kommunikation zwischen mindestens zwei Personen in der Kommunikationsplattform, wobei die weitere Kommunikation mindestens einen Servicefall oder mindestens eine numerische Darstellung eines Servicefalls aufweist, und Suchen mindestens eines ähnlichen Servicefalls in der Speichereinheit anhand des mindestens einen Servicefalls oder der mindestens einen numerischen Darstellung des Servicefalls eingerichtet. Dementsprechend kann der Bot eine weitere oder aktuelle Kommunikation live ("LiveChat"), wie eine aktive Konferenz abhören. Diese weitere Kommunikation kann er nutzen um einen oder mehrere gespeicherte Servicefälle in der Speichereinheit zu suchen, welche dem Servicefall der weiteren oder aktuellen Kommunikation ähnlich sind. Mit anderen Worten, nimmt der Bot an der Kommunikation teil und kann sich einschalten indem er das Problem erkennt und den an der Kommunikation beteiligten Personen eine Lösung anbietet. Der Bot verhält sich in diesem Fall proaktiv. Folglich kann der Bot, mit anderen Worten, die Personen vorteilhafterweise in ihrer Kommunikation unterstützen, indem er bereits gespeicherte Problemlösungen ähnlicher Fälle sucht und anbietet.

In einer weiteren Ausgestaltung ist der Bot weiterhin zum Suchen mindestens eines ähnlichen Servicefalls in der Speichereinheit auf Anfrage mindestens einer Person der mindestens zwei Personen eingerichtet. Dementsprechend kann der Bot alternativ auf Anfrage einer oder mehrerer Personen auch einen oder mehrere gespeicherte Servicefälle in der Speichereinheit suchen, welche dem Servicefall der weiteren oder aktuellen Kommunikation ähnlich sind. Mit anderen Worten, wird die Datenbanksuche durch Personen initiiert. Der Bot ist in diesem alternativen Fall reaktiv. Dadurch kann der Bot die Personen vorteilhafterweise unterstützen, indem er bereits gespeicherte Problemlösungen ähnlicher Fälle je nach Wunsch oder Bedürfnis anbietet.

In einer weiteren Ausgestaltung wird die Ähnlichkeit des mindestens einen ähnlichen Servicefalls durch eine Kosinus-Ähnlichkeit ermittelt und ihm auf Basis der Kosinus-Ähnlichkeit ein Kosinus-Ähnlichkeitswert zugewiesen. Dementsprechend wird der Servicefall der weiteren Kommunikation mit den abgespeicherten Servicefällen der Datenbank verglichen. Insbesondere werden deren numerischen Darstellungen auf Basis der Kosinus-Ähnlichkeit oder anderer Ähnlichkeitsmaße miteinander verglichen. Mit anderen Worten, wird eine Ähnlichkeitsberechnung zwischen Vektoren gleicher Dimensionen durchgeführt. Darauf aufbauend können die ähnlichen Servicefälle vorteilhafterweise bewertet werden.

In einer weiteren Ausgestaltung ist der Bot weiterhin zum Erzeugen mindestens eines ähnlichen Servicefalls durch Anwenden eines linguistischen Algorithmus auf die weitere Kommunikation eingerichtet, falls der Ähnlichkeitswert einen bestimmten Schwellwert unterschreitet. Dementsprechend kann der Bot auch selbst Servicefälle erzeugen. Hierzu kann ebenfalls ein linguistischer Algorithmus Anwendung finden. Die Schwellwertunterschreitung liegt insbesondere bei einer fehlenden oder teilweisen Problemerkennung vor. Dies entspricht hinsichtlich der obigen Ähnlichkeitsberechnung keiner oder teilweiser Übereinstimmung und somit geringen oder unzureichenden Ähnlichkeitswerten. Der Vorteil ist darin zu sehen, dass den Personen dennoch anstelle keiner Lösung eine alternative Lösung in Form von Teilergebnissen bereitgestellt wird. Beispielsweise liefert die Problemerkennung lediglich das Bauteil, wie die Turbine. Diese Teillösung in Form der Teilerkennung durch den Bot kann für die Personen nützlich sein, indem Sie in diesem Bauteil weiter nach Störungen und Fehlern suchen.

In einer weiteren Ausgestaltung ist der Bot weiterhin zum Erzeugen mindestens eines Tickets aus dem mindestens einen Servicefall eingerichtet.

Die Erfindung betrifft ferner eine Kommunikationsplattform, aufweisend den obigen Bot.

Die Erfindung betrifft ferner ein computerimplementiertes Verfahren für eine Kommunikationsplattform:
a. Einlesen eines Eingangsdatensatzes durch einen Bot, wobei
   der Eingangsdatensatz eine Mehrzahl von Tickets oder einer Mehrzahl numerischer Darstellungen von Tickets umfasst,
b. Abhören mindestens einer Kommunikation zwischen mindestens zwei Personen in der Kommunikationsplattform durch den Bot, wobei
   die mindestens eine Kommunikation mindestens einen Servicefall oder mindestens eine numerische Darstellung eines Servicefalls aufweist, und
c. Erzeugen eines Ausgangsdatensatzes durch den Bot, wobei
   der Ausgangsdatensatz den Eingangsdatensatz und die mindestens eine Kommunikation aufweist.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt eine schematische Darstellung eines erfindungsgemäßen Bots in einer Kommunikationsplattform.
- FIG 2: zeigt ein Ablaufdiagramm eines erfindungsgemäßen Verfahrens.

### 5. Beschreibung der bevorzugten Ausführungsformen

Im Folgenden werden bevorzugte Ausführungsformen der vorliegenden Erfindung in Bezug auf die Figuren beschrieben.

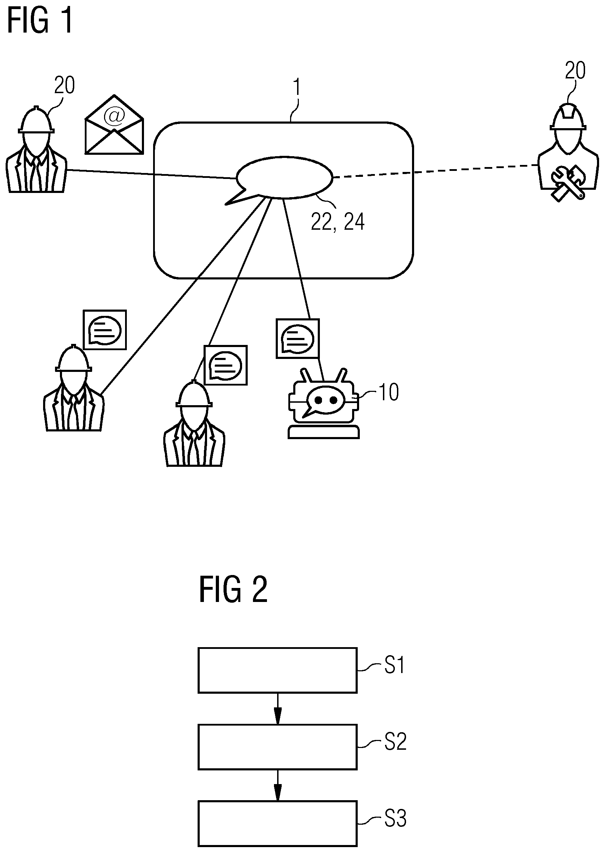

Figur 1 stellt einen erfindungsgemäßen Bot 10 in einer Kommunikationsplattform 1 schematisch dar. Die Kommunikationsplattform 1 kann als beliebige, wie eine moderne Kommunikationsplattform 1, ausgebildet sein. Die Kommunikationsplattform 1 gewährleistet einen effizienten Informationsaustausch zwischen zwei oder mehreren Personen 20, wie Mitarbeitern oder Experten. Beispielsweise tauschen Experten 20 Informationen hinsichtlich einer Turbine aus, wie weiter oben aufgeführt. Der Informationsaustausch erfolgt dabei in Form von Nachrichten beispielsweise via Email, Telefon oder sonstigen Kommunikationsarten.

Der Bot 10 hört eine Kommunikation 22 oder mehrere Kommunikationen 24 zwischen Personen 20 ab. Beispielsweise schaltet sich der Bot 10 in eine aktive Konferenz einer Gruppe von Experten 20 ein und hört deren Konferenz ab. Die entsprechende Kommunikation 22 der Konferenz ist auf einen oder mehrere Servicefälle gerichtet, wie beispielsweise einen bestimmten Ausfall oder einen Störfall der Turbine. Der jeweilige Servicefall kann in unterschiedlichen Formaten vorliegen, wie Text oder in einer numerischen Darstellung.

Weiterhin fügt der Bot 10 die abgehörte Kommunikation 22 mit einem Eingangsdatensatz zusammen. Folglich wird ein eingelesener Eingangsdatensatz aus vergangenen oder bereits vorhandenen Servicefällen um aktuelle Servicefälle der Konferenz ergänzt und in einem Ausgangsdatensatz entsprechend gespeichert.

Der Ausgangsdatensatz kann in einer Speichereinheit, insbesondere Datenbank gespeichert werden. Alternativ zu Datenbanken kommen jegliche andere Speichereinheiten in Betracht, auf deren Inhalte zugegriffen werden kann.

Figur 2 zeigt das erfindungsgemäße Verfahren mit den drei Verfahrensschritten in einem Ablaufdiagramm. Die Verfahrensschritte das Einlesen S1, das Abhören S2 und das Erzeugen S3 werden durch den Bot 10 durchgeführt, wie weiter oben im Detail beschrieben.

## Patentansprüche

1. Bot (10) für eine Kommunikationsplattform (1),
wobei der Bot (10) zum
a. Einlesen eines Eingangsdatensatzes (S1), wobei
der Eingangsdatensatz eine Mehrzahl von Tickets oder einer Mehrzahl numerischer Darstellungen von Tickets umfasst,
b. Abhören mindestens einer Kommunikation (22) zwischen mindestens zwei Personen (20) in der Kommunikationsplattform (1) (S2), wobei
die mindestens eine Kommunikation (22) mindestens einen Servicefall oder mindestens eine numerische Darstellung eines Servicefalls aufweist, und
c. Erzeugen eines Ausgangsdatensatzes (S3), wobei
der Ausgangsdatensatz den Eingangsdatensatz und die mindestens eine Kommunikation (22) aufweist,
eingerichtet ist.

2. Bot (10) nach Anspruch 1, wobei der Bot (10) zum Umwandeln der Mehrzahl der Tickets durch einen linguistischen Algorithmus in eine Mehrzahl numerischer Darstellungen der Tickets eingerichtet ist.

3. Bot (10) nach Anspruch 1 oder Anspruch 2, wobei der Bot (10) zum Umwandeln des mindestens einen Servicefalls durch einen linguistischen Algorithmus in mindestens eine numerische Darstellung des Servicefalls eingerichtet ist.

4. Bot (10) nach einem der vorhergehenden Ansprüche, wobei
der Bot (10) weiterhin zum Speichern des Ausgangsdatensatzes in einer Speichereinheit, insbesondere Datenbank, eingerichtet ist.

5. Bot (10) nach Anspruch 4, wobei der Bot (10) weiterhin zum
Abhören einer weiteren Kommunikation (24) zwischen mindestens zwei Personen (20) in der Kommunikationsplattform (1), wobei
die weitere Kommunikation (24) mindestens einen Servicefall oder mindestens eine numerische Darstellung eines Servicefalls aufweist, und
Suchen mindestens eines ähnlichen Servicefalls in der Speichereinheit anhand des mindestens einen Servicefalls oder der mindestens einen numerischen Darstellung des Servicefalls
eingerichtet ist.

6. Bot (10) nach Anspruch 4, wobei der Bot (10) weiterhin zum
Suchen mindestens eines ähnlichen Servicefalls in der Speichereinheit auf Anfrage mindestens einer Person (20) der mindestens zwei Personen (20) eingerichtet ist.

7. Bot (10) nach Anspruch 5 oder Anspruch 6, wobei die Ähnlichkeit des mindestens einen ähnlichen Servicefalls durch eine Kosinus-Ähnlichkeit ermittelt wird und ihm auf Basis der Kosinus-Ähnlichkeit ein Kosinus-Ähnlichkeitswert zugewiesen wird.

8. Bot (10) nach Anspruch 7, wobei der Bot (10) weiterhin zum Erzeugen mindestens eines ähnlichen Servicefalls durch Anwenden eines linguistischen Algorithmus auf die weitere Kommunikation eingerichtet ist, falls der Ähnlichkeitswert einen bestimmten Schwellwert unterschreitet.

9. Bot (10) nach einem der vorhergehenden Ansprüche, wobei der Bot (10) weiterhin zum Erzeugen mindestens eines Tickets aus dem mindestens einen Servicefall eingerichtet ist.

10. Kommunikationsplattform (1), aufweisend einen Bot (10) nach mindestens einem der vorhergehenden Ansprüche.

11. Computerimplementiertes Verfahren für eine Kommunikationsplattform:
a. Einlesen eines Eingangsdatensatzes durch einen Bot (S1), wobei
der Eingangsdatensatz eine Mehrzahl von Tickets oder einer Mehrzahl numerischer Darstellungen von Tickets umfasst,
b. Abhören mindestens einer Kommunikation zwischen mindestens zwei Personen in der Kommunikationsplattform durch den Bot (S2), wobei
die mindestens eine Kommunikation mindestens einen Servicefall oder mindestens eine numerische Darstellung eines Servicefalls aufweist, und
c. Erzeugen eines Ausgangsdatensatzes durch den Bot (S3), wobei
der Ausgangsdatensatz den Eingangsdatensatz und die mindestens eine Kommunikation aufweist.

12. Computerprogrammprodukt mit einem Computerprogramm, das Mittel zur Durchführung des Verfahrens nach Anspruch 11 aufweist, wenn das Computerprogramm auf einer programmgesteuerten Einrichtung zur Ausführung gebracht wird.
